# EUROPEAN PATENT SPECIFICATION

(11) **EP 0 574 224 B1**
(45) Date of publication and mention of the grant of the patent: **02.02.2000**
(21) Application number: 93304434.9
(22) Date of filing: 08.06.1993
(51) Int. Cl.: G06K 15/00

(54) **Apparatus and method for decomposing a job in a printing system**
Vorrichtung und Methode für das Aufgliedern einer Arbeitanweisung in einem Duckersystem
Dispositif et méthode de décomposition d'une directive de travail dans un système d'impression

(30) Priority: 12.06.1992 US 898761
(43) Date of publication of application: 15.12.1993
(73) Proprietor: XEROX CORPORATION, Rochester, New York 14644 (US)
(72) Inventor: Harrington, Steven J., Holley, New York 14470 (US); Hsu, Lillian-Liu, Rochester, New York 14625 (US); Bonk, Lawrence R., Honeoye Falls, New York 14472 (US); Zell, Thomas B., Victor, New York 14564 (US); Catapano, David A., Webster New York 14580 (US); Krist, Peter M., Rochester, New York 14612 (US); Bryant, Richard E., Penfield, New York 14526 (US); Legg, Ernest L., Fairport, New York 14450 (US); Allen, Irene M., Pittsford, New York 14534 (US); Rulli, Paul A., Webster, New York 14580 (US)
(74) Representative: Grünecker, Kinkeldey, Stockmair & Schwanhäusser Anwaltssozietät

(56) References cited:
- EP-A- 0 420 474
- EP-A- 0 428 370
- EP-A- 0 470 782
- US-A- 5 136 688
- PATENT ABSTRACTS OF JAPAN vol. 16, no. 327 (P-1387) 16 July 1992 & JP-A-04 096 095 (OKI ELECTRIC IND CO LTD) 27 March 1992
- PATENT ABSTRACTS OF JAPAN vol. 16, no. 166 (E-1193) 22 April 1992 & JP-A-04 013 369 (RICOH CO LTD) 17 January 1992

## Description

The present invention relates generally to an apparatus and method for DECOMPOSING a job in a printing system according to the preambles of claims 1 and 5.

Personal computers have become commonplace on the desks of most office workers. Typically, much of the work product of such computers is intended to be transformed into hardcopy via a printer using digital imaging technology. A typical printer configuration for this purpose comprises a dedicated printer coupled to the personal computer ("PC"). However, printers used for this purpose are typically small laser printers which have limited functions and features such as a limited tray capacity which restricts the number and types of copy sheets that can be used to make prints on, or which do not have a finishing capability, etc.

On the other hand, larger high speed laser printers normally have a great deal of finishing and copy sheet capability which would allow the PC user to have, for example, custom printing and finishing of his work product, an option which for many PC users would be highly desirable. In practice, the PCs can be used advantageously with a network printing system of the type combining a number of client inputs, such as the PCs, or the like, and one or more printer outputs. In one example of such network printing systems, a client at one of the inputs sends electronic documents that comprise a job over a local area network (LAN) to one of the printers selected for printing of the job. In particular, LANs provide a means by which users running dedicated processors are able to share resources such as printers, file servers and scanners. Integration of shared resources has been a problem addressed by LAN managers. LAN managers have made different network protocols transparent to devices running different network protocols. LANs also have a variety of print drivers emitting different page description languages (PDLs), which are directed to specific print devices.

A PDL, such as Interpress provided by Xerox® Corp. permits arithmetic computation, conditional execution, and procedure definition, in addition to special operations that construct a page image. Typically, a PDL supports imaging characters in a variety of fonts, faces, sizes and orientations, as well as line art, graphics and pictorial images. Because it is a language, the PDL describes a document in terms of software, the software being used to generate primitives that can be imaged onto a substrate with a marking engine. Further information regarding Interpress can be found in the following reference, the pertinent portions of which are incorporated herein by reference:
Harrington, S. J. and Buckley, R. R.
*Interpress: The Source Book*
Simon & Schuster, Inc.
New York, N.Y.
1988

While the use of a PDL to store and transmit an input document is desirable for several reasons, such use can complicate printing since much effort must be expended by the printer in converting the PDL of the input document into hardware imaging primitives that actually produce the print. In particular, an input format of an input document written in a PDL contains primitives that are at a "higher level" than the imaging primitives, so that the input document must be "taken apart" into its individual imaging components with a decomposing technique or the like. Preferably, a decomposer, with one or more processors and suitable software, is employed to implement the technique.

In operation, the decomposer executes the PDL to generate the imaging primitives. The types of operations required to perform this task include-binding of the printer fonts to the requested fonts, any imaging processing on pictorial information, and/or converting line art/graphics to lower level imaging primitives. This process has historically taken much longer than the actual imaging, resulting in loss of throughput.

US-A-5 170 340 discloses a pre-parser for receiving commands and Page Description Language PDL-data from a net and for converting this data into an internal format. The converted commands are communicated to a command processor where they are further converted into a sequence of job processor - and system state controller commands in order to be communicated to a job processor and to a system state controller, respectively.

It is the object of the invention to provide an apparatus and a method which minimize the amount of time required to perform decomposing functions.

This object is solved by the subject matters of claims 1 and 5. Further, advantageous embodiments of the invention are subject matters of the dependent claims.

The present invention will be described further, by way of example, with reference to the accompanying drawings, in which:-
Figure 1 is a schematic, block diagramatic view of an electronic printing machine in which the present invention can be carried out;
Figure 2 a schematic, block diagramatic view of a processor/printer interface for the printing machine shown in Figure 2;
Figures 3A and 3B represent a schematic, block diagramatic view of an arrangement for decomposing a job written in a printer page description language;
Figure 4 is a flow diagram providing an overview for the function of the arrangement in Figures 3A and 3B;
Figure 5 is a graphic representation illustrating certain functional aspects of the present arrangement;
Figures 6A and 6B represent a flow diagram depicting the operation of parsing in the decomposing arrangement;
Figure 7 is a schematic view of a screen displayed on a user interface, the screen comprising a job ticket for programming various instructions to be performed in conjunction with the job;
Figure 8 is a schematic view of a supplemental job ticket capable of being used with the the job ticket of Figure 7;
Figure 9 is a flow diagram depicting the operation of coalescing in the decomposing arrangement;
Figure 10 is a schematic, block diagramatic view of a section of a coalescing section in the decomposing arrangement of Figures 3A and 3B;
Figure 11 is a flow diagram depicting the operation of postparsing in the decomposing arrangement;
Figure 12 is a graphic representation illustrating time/storage constraints encountered for various levels of primitives; and
Figure 13 is a schematic view of a screen displayed on a user interface, the screen comprising a graphic tool for performing an editing function, such as "cut and paste".

While the present invention will hereinafter be described in connection with a preferred embodiment thereof, it will be understood that it is not intended to limit the invention to that embodiment. On the contrary, it is intended to cover all alternatives, modifications and equivalents as may be included within the scope of the invention as defined by the appended claims.

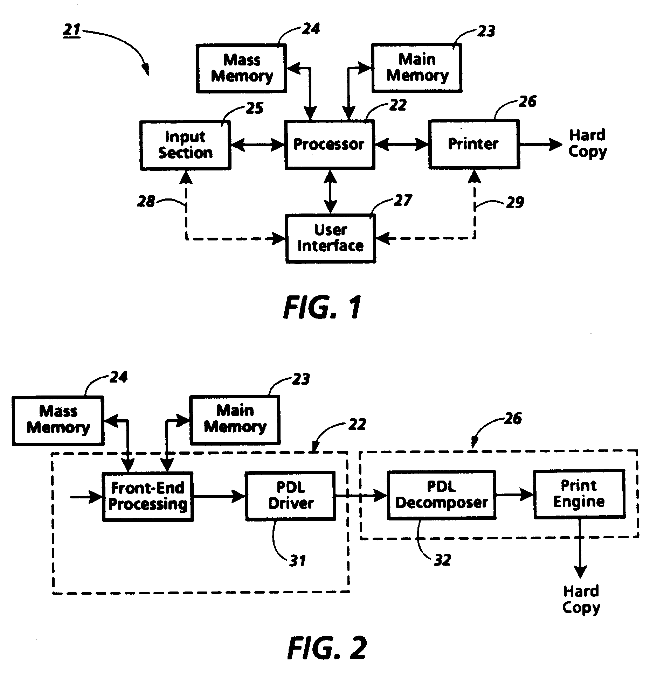

Turning now to the drawings, and at this point especially to Figure 1, there is an electronic document processing system 21 to illustrate a typical environment for this invention. In keeping with standard practices, the document processing system 21 comprises a digital processor 22 having a main memory 23 and a mass memory 24, an input section 25 for providing a job written in a printer page description language (PDL), and a printer 26 for printing hardcopy renderings of selected image components obtained from the PDL. Furthermore, there is a user interface 27 for enabling a user to interact with the processor 22, the input scanner 25, and the printer 26.

As will be understood, the user interface 27 collectively represents the input devices through which the user enters image editing and manipulation instructions for the processor 22. Additionally, the interface 27 represents the output devices through which the user receives feedback with respect to the actions that are taken in response to the instructions that are entered by the user or otherwise, such as under program control. For example, the user interface 27 generally includes a keyboard or the like for entering use instructions, a monitor for giving the user a view of the process that is being performed by the processor 22, and a cursor controller for enabling the user to move a cursor for making selections from and/or for entering data into a process that is being displayed by the monitor (none of these conventional components is shown).

The illustrated document processing system 21 is centralized, so it has been simplified by assuming that all control instructions and all image editing and manipulation instructions are executed by the processor 22 under program control. In practice, however, the execution of these instructions may be handled by several different processors, some or all of which may have their own main memory and even their own mass memory. Likewise, either or both of the input scanner 25 and the printer 26 may have its own user interface, as indicated by the dashed lines 28 and 29, respectively. Indeed, it will be evident that the document processing system 21 could be reconfigured to have a distributed architecture to operate with a remote input section and/or a remote printer (not shown). Data could be transferred from and to such remote input section and printer terminals via dedicated communication links or switched communication networks (also not shown).

As shown in Figure 2, the processor 22 preferably includes a PDL driver 31 for transferring to the printer 26 PDL descriptions of the electronic document files that are selected for printing. Thus, the printer 26 is illustrated as having a PDL decomposer 32 for decomposing such PDL descriptions to produce corresponding bitmapped image file. It will be appreciated, particularly in view of the discussion below, that the decomposer 32 is capable of receiving PDL files from mass memory, such as disk, or from off the network "on the fly."

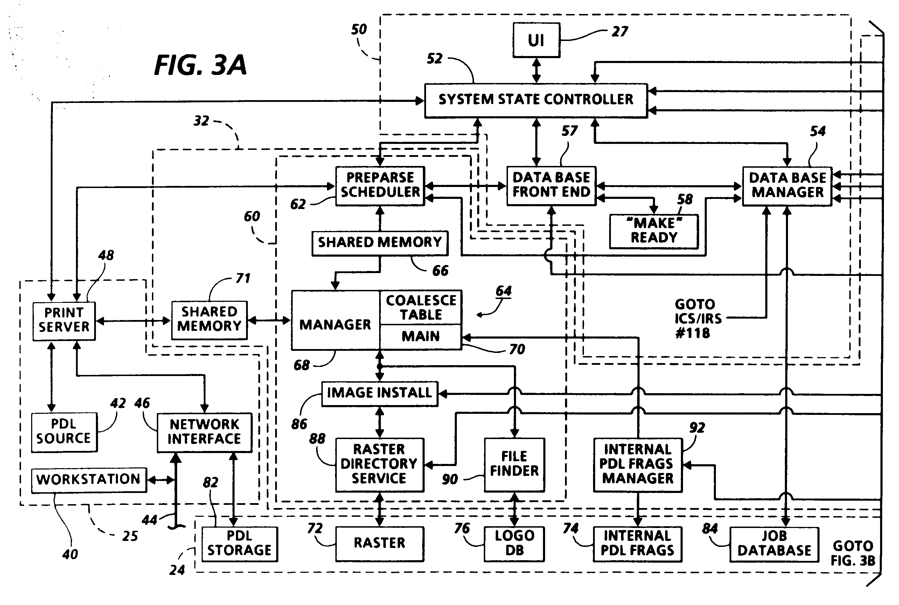

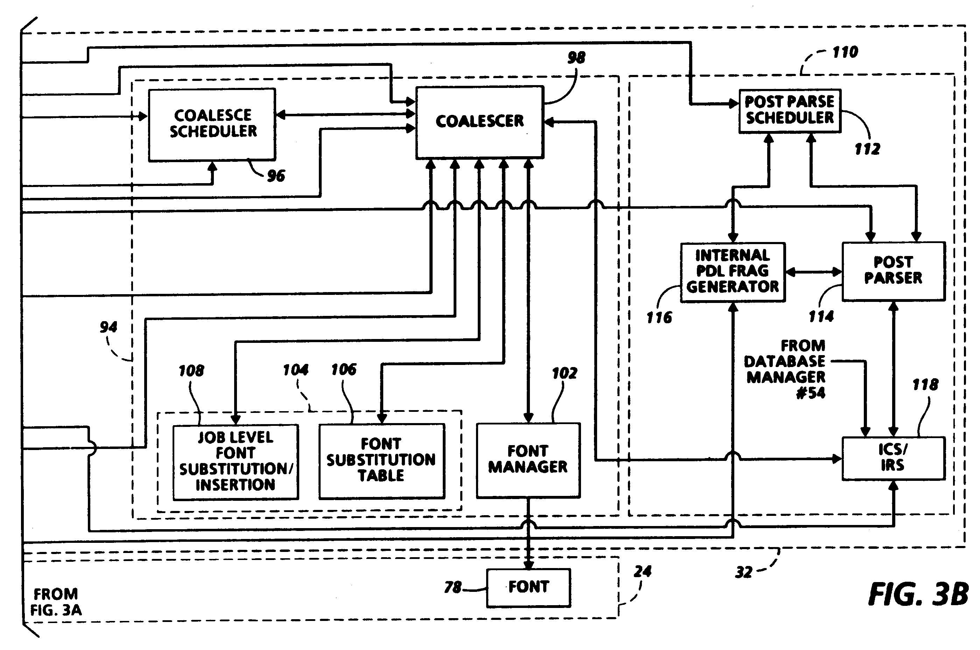

Referring to Figures 3A and 3B, an arrangement including the mass memory 24, the input section 25 and the decomposer 32 is shown. Referring specifically to Figure 3A, the input section 25 preferably comprises up to two PDL emitters, such as a workstation 40, or any other suitable PDL source 42. In one Example the workstation 40 is Xerox® 6085 (the term "Xerox 6085" is trademark used by Xerox® Corp.) workstation coupled with a network 44, such as a network sold by Xerox® Corp. under the trademark of EtherNet™. The network is interfaced with the decomposer 32 by way of a suitable network interface 46, which could include one of many known interfaces such as TCPIP™, AppleTalk™ or Token Ring™. Both of the workstation 40 and the PDL source 42 are interfaced with the decomposer 32 by way of a print server 48, which print server 48 can be a suitable protocol corresponding with the specifications of the PDL Source 42 and/or the network interface 46. The print server 48 communicates with a system manager 50.

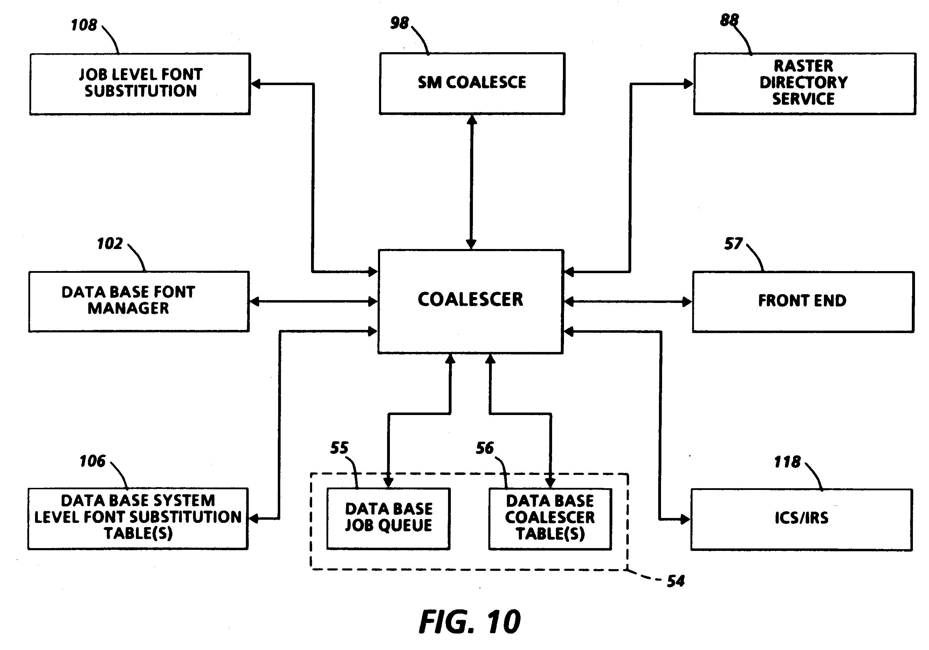

In the preferred embodiment, the system manager 50 comprises a system state controller (SSC) 52 of the type disclosed in U.S.A. Patent No. 5,170,340, the user interface (UI) 27, which, in one example, is of the type disclosed in U.S. Patent No. 5,083,210, the pertinent portions of which are incorporated herein, a database manager 54 and a database front end processor 57. Additionally, the database manager 54 preferably comprises a database job queue 55 (Figure 10) and a database coalescer table 56. The features of the present invention can be obtained through use of any suitable, commercially available database. Alternatively, one of ordinary skill in the art could, without undue experimentation, construct the database of the present invention by reference to one of several known texts, such as the following text:
Martin, J.
Computer Data-Base Organization
Prentice Hall, Inc.
Englewood Cliffs, New Jersey
1975

The database front end processor 57, which serves to define the structure of the PDL job, and the sequence in which image related identifiers stored in the database are operated on, can be constructed by those skilled in the art in view of the type of database manager selected for use. As will appreciated from the discussion below, the database manager 54 is the conduit through which virtually all image related identifiers and all job identifiers ("handles") flow. Moreover, editing of postparsed information is achieved by use of a "make ready" process 58 which is coupled with the front end 57. The "make ready" process, which serves to interpret operator commands for performing bitmap processing, is used in the DocuTech™ electronic printer which is sold by Xerox® Corp.

Referring still to Figure 3A, the print server 48, the SSC 52 and the data base front end processor 57 each communicate with a parsing section 60 by way of a preparse scheduler 62. In the preferred embodiment, the steps of the parsing section 60 are performed on a MESA™ processor of the type manufactured by Xerox® Corp. The preparse scheduler 62 communicates with a preparser 64 by way of a block of shared memory 66. In the preferred embodiment of the present invention, the preparser consists of a manager section 68 and a main section 70. In one example, the manager section comprises a processor of the type referred to immediately above, and the main section comprises a similar processor and a math coprocessor which, for the most part, is similar to commercially available math coprocessors. Additionally, the manager 68 communicates with the print server 48 by way of a block of memory 71, and the main section 70 is configured to store a coalesce table, the significance of which will be discussed in further detail below.

The preparser 64, which serves to break up PDL into image related components, is capable of storing those components in mass memory 24, which, in the preferred embodiment is a disk storage device, such as the one used on the DocuTech™ electronic printer manufactured by Xerox® Corp. Preferably, the disk storage device is adapted to receive rasters in raster storage section 72 and internal PDL fragments ("internal PDL frags") in internal PDL frags. section 74. It should be recognized that internal PDL fragments are higher level primitives to be imaged on a substrate. In one example, an internal PDL fragment serves to transform coordinate systems inputted to the decomposer for printing. Employment of other storage sections in the mass memory 24 to receive other image related components is contemplated by the present invention.

In practice, the mass memory 24 is configured to not only receive and store the image related components developed by the preparser 64, but to store, on a long term basis, a relatively large variety of logos (in logo DB storage section 76) and fonts (in font section 78). Employment of other storage sections in the mass memory 24 to store other image related components, on a long term basis, is contemplated by the present invention. Additionally, the disk storage device preferably includes section 82 for storing PDL files to be processed and a section 84 for storing all information communicated to the database manager 54. In one example, the job database 84 is adapted to contain a structure for and image related components of a job written in a PDL. It will be appreciated by those skilled in the art that a suitable memory arrangement could be used in place of the job database without affecting the underlying concept of the present invention.

In practice, the preparser 64 is interfaced to the raster section 72 by way of an image install process 86 and a raster directory service (DS) 88, to the logo DB section by way of a file finder process 90 and to the Internal PDL Frags section by Internal PDL Frags Manager 92. In the illustrated embodiment of Figure 3A, the raster DS 88 is adapted to assign an image identifier to each raster transmitted thereto, and pass each of those identifiers to the preparser 64. Similarly, the internal PDL frags manager 92 is adapted to assign an image identifier to each internal PDL fragment transmitted thereto, and pass each of those identifiers to the preparser 64. On the other hand, the file finder 90 assigns an identifier to calls for logos received at the preparser 64 from the print server 48, and permits the logos to be fetched by the preparser 64 when they are available in the logo DB section 76. When the called for logo is not available in the logo DB section, the file finder 90 is capable of issuing an appropriate fault message for display at the UI 27 or for printing with a hardcopy print.

Referring still to Figure 3B, the results of the preparsing process are eventually passed on to the coalesce section 94. The coalesce section 94 comprises a coalesce scheduler 96 that communicates with a coalescer 98. The coalescer scheduler 96 functions under the influence of the SSC 52 and the database manager 54 to manage the various functions of the coalescer 98. The coalescer 98 communicates with the fonts storage section 78 by way of a font manager 102. In the preferred embodiment, the fonts storage section 78 comprises a font database and the font manager 102 is capable of interpreting the data structures therein. In particular, the font manager 102 is adapted to scan the data structures of the font database to check whether a font requested by the coalescer 98 is present in the font database. The coalescer 98 also communicates with a font substitution/insertion section 104, the section 104 comprising a font substitution table arrangement 106 of the type described in U.S.A. Patent No. 5,167,013, and a job level substitution/insertion process 108. In one example, the insertion aspect of the substitution/insertion process 108 is directed toward a tape source for manually loading fonts of the type used in the DocuTech™ electronic printer sold by Xerox® Corp. In another example, the substitution aspect of the substitution/insertion process 108 is any suitable arrangement in which a user of the decomposer 32 can facilitate the manual substitution of a font available in the font database of the fonts storage section 78 for an unavailable font called for in a job provided from the input section 25.

Image related components of each job are ultimately processed into printable form, or more specifically, to "lower level primitives," by use of a postparsing section 110 which includes a postparse scheduler 112. The postparse scheduler 112 functions under the influence of the SSC 52 and the database manager 54 to manage the various functions of a postparser 114. The postparse scheduler 112 also communicates with an internal PDL frags generator 116, the generator 116 being capable of accessing the internal PDL frags storage section 74, by way of the internal PDL frags manager 92, for generating selected internal PDL fragments stored in the internal PDL frags storage section 74. In turn, the generator 116 communicates with the postparser 114 for passing the selected generated fragments thereto. Each of the coalescer 98 and the postparser 114 communicate with an image processing arrangement 118, the arrangement 118 including an image conversion service (ICS) and an image resampling service (IRS). As should be recognized, the ICS and the IRS provide a host of image processing services for use with the various image components from each processed jobs, such services including image rotation, color processing, halftoning, image resolution (e. g. scaling) and the like. In the preferred embodiment, the ICS/IRS communicates with the image install 86 to perform image processes on selected rasters in the raster storage section 72. The various components of the postparsing arrangement, including the ICS/IRS are commercially available on the DocuTech™ electronic printer sold by Xerox® Corp.

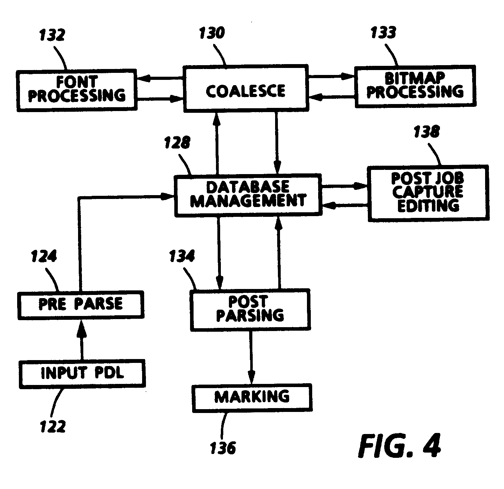

Referring to Figure 4, an overview of the operation of the illustrated system of Figure 3 is shown. To initiate decomposition, a job is communicated from the input section 25 to the decomposer 32 (step 122). After appropriate coordination has occurred, information is passed to the preparse section 64 (step 124), the information is parsed into image related components and, per step 128, identifiers corresponding to the components are stored in the job database 84 by the database manager 54. Some time after a first page of the job is parsed, the identifiers are passed from the database to the coalesce section 94 (step 130) for font processing (step 132) and bitmap processing (step 133). Coalesced information is then postparsed (step 134) to form a bandlist, and the bandlist is marked at step 136. In the preferred embodiment, coalesced information can be edited (step 138), as described below.

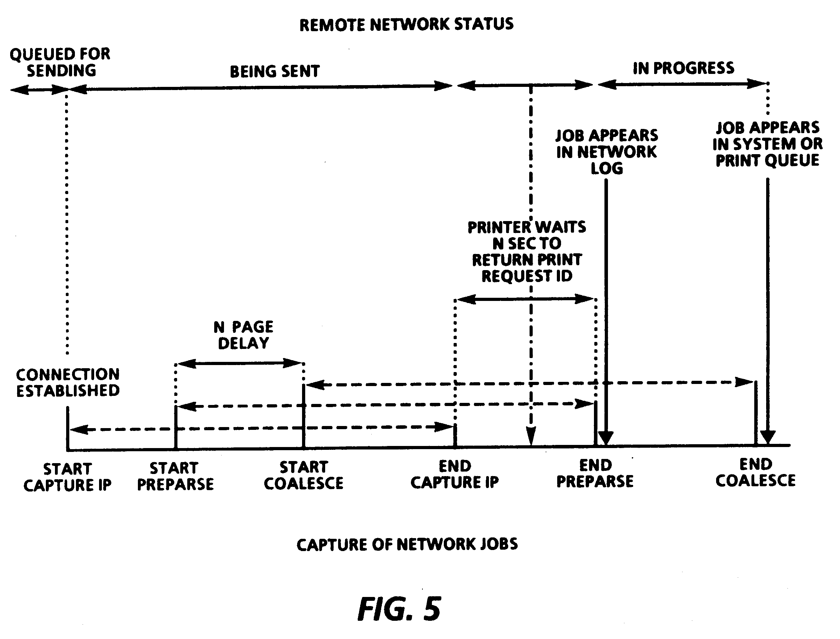

Referring to Figure 5, the multi-process capability of the decomposer 32, for even just one job, can be readily appreciated. As illustrated by Figure 10, the decomposer 32 can preparse a job concurrently with it being captured from the network. After N page(s) of preparsed information has been passed along to the database, the decomposer can start coalescing concurrently with capturing and preparsing. As further illustrated by Figure 5, the job can be decomposed "on-the-fly" with respect to the network.

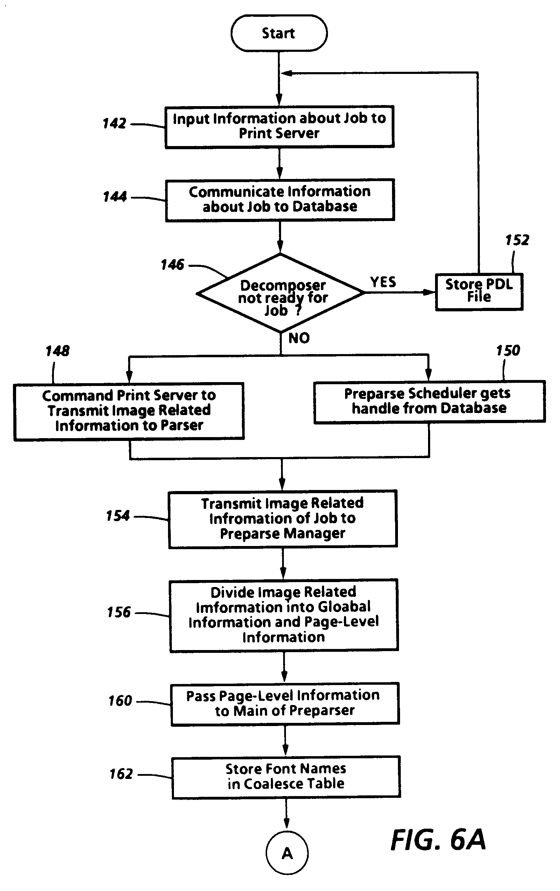

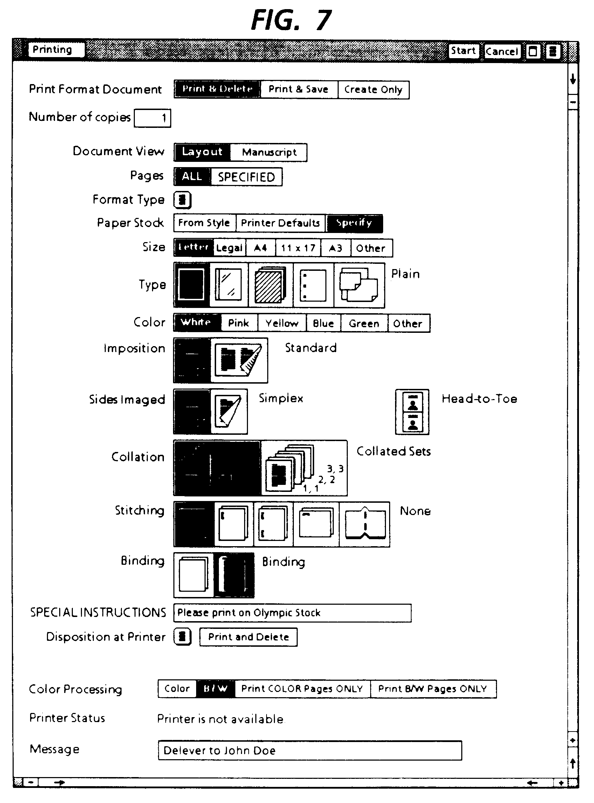

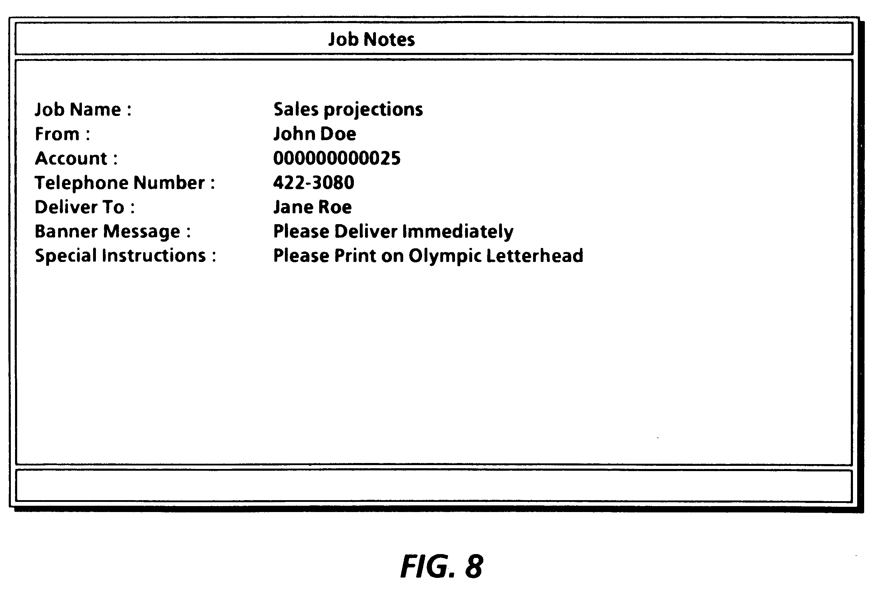

Referring to Figures 6A-6B, the inputting and parsing of the PDL file(s) will be discussed in further detail. Referring specifically to Figure 6A, at step 142, a job file written in a particular PDL, such as Interpress used by Xerox® Corp.,is provided from either the workstation 40 or the PDL source 42. For those situations in which the job is developed on the workstation 40, a job ticket, of the type shown in Figure 7, may be employed. As illustrated in Figure 7, the job ticket provides various choices with respect to finishing. In programming the job, it may also be desirable to transmit information to the printer 26 regarding billing and accounting. This type of information can be programmed in a supplementary ticket of the type shown in Figure 8. It should be recognized that much of the information transmitted to the decomposer 32, in the form of the tickets of Figures 7 and 8, is included in the form of global information, versus page level information. Additionally, while generating his/her program, the programmer may include calls to rasters, logos and other like bitmaps that he/she knows is on the machine. Accordingly, as will become clear from the discussion below, that call can be used as an identifier to pull up one or more image related components, such as a logo, for eventual printing at the printer 26.

Upon inputting the PDL job to the print server 48, basic information regarding, for example, the structure of the job and the order in which the job should be processed, is transmitted to the database manager 54 (step 144) by way of the preparse scheduler 62 and the database front end processor 57. The database manager 54 indicates to the SSC 52 that it has a job, and in due course, provided that the decomposer is ready (see step 146), the SSC 52 commands the print server 48 to begin transmitting blocks of the PDL file to the manager section 68 across shared memory block 71 (step 148) and causes the preparse scheduler 62 to obtain a job identifier ("handle") from the database manager 54 (step 150). The handle represents the information that the preparse scheduler 62 will need to pass the image related identifiers resulting from the parsing process on to the database manager 54. Alternatively, as illustrated by steps 146 and 152, if a job is ready to be inputted concurrent with a job being processed, the job that is ready to be inputted can be stored for subsequent processing

As the PDL is transmitted to the manager section 68 (step 154), it is, per step 156, broken down into global information, such as a header and a preamble, and page level information. As mentioned above, such global information can include billing and accounting information. Additionally, the manager 68 finds the beginning of each page within the job file ("master") for setting up the image related components ("data structures") to be received by the main section 70. Essentially, the manager functions as a syntactical analyzer, insuring that the syntax of the encoded PDL master is correct. The manager preferably performs some prework for the main section 70 and possesses limited interpretative capabilities.

At step 160, page-level information is passed from the manager 68 to the main section 70 at which informations, or, more specifically, data structures are created. The main looks into a linked list of set up pages and sequentially decomposes them. The manager and the main section 70 can work on separate pages or the main section 70 can work ahead of the manager within a page. Once the manager has created a data structure for a page, the main section 70 executes data structures within the page for storage in the mass memory 24. Per step 162, the main section 70 inserts any font names that it gleans from pages in a coalesce table stored in the main.

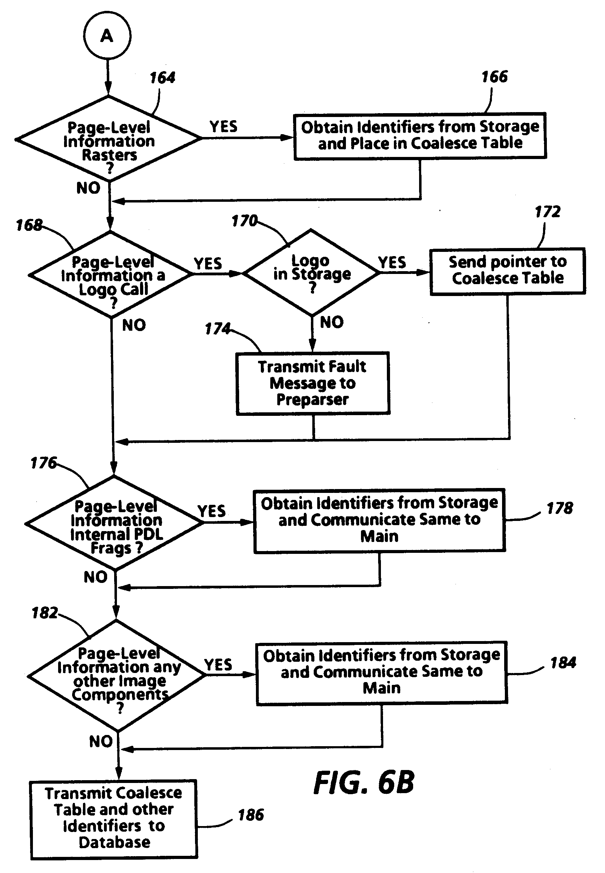

Referring to Figure 6B, once the page-level data structures are available, identifiers therefore are obtained. If rasters or bitmaps are found among the data structures (step 164), they are communicated to the raster storage section 72 by way of the image install 86 and the raster DS 88. Per step 166, the rasters are assigned identifiers by the raster directory service, and the identifiers are passed to the main section 70 for placement in the coalesce table. If logo calls, i. e. calls for a merge item, are found among the data structures (step 168), the file finder 90 checks to see if the logos are in the logo DB section 76 (step 170), For those logos in the logo DB, corresponding pointers for the available logos are communicated to the main (step 172) for placement in the coalesce table. For those logos not in the logo DB, a fault message is, per step 174, returned to the main for eventual display or printing into hardcopy. Per steps 176 and 178, internal PDL fragments are created and communicated to the internal PDL frags storage section 74 by way of the internal PDL frags manager 92. Per step 178, the internal PDL fragments are assigned identifiers or "tokens" by the internal PDL frags manager 92, and the identifiers are passed to the main section 70. As shown by steps 182 and 184 any other data structures flowing from the main 70 would be handled in a manner similar to that shown for rasters or internal PDL fragments. After all of the identifiers are provided to the main 70, a signal is sent to the preparse scheduler 62, and the identifiers, per 186, are communicated to the database manager 54.

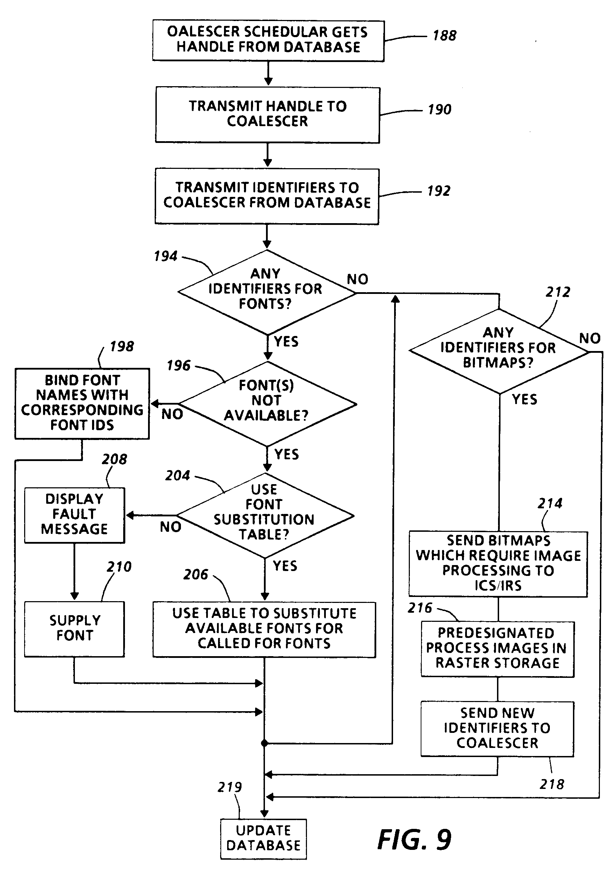

Referring conjunctively to Figures 3, 9 and 10, further discussion with respect to coalescing, i. e. performing font processing and/or bitmap processing on certain stored data structures, is provided. Referring specifically to Figure 9, at step 188, the coalescer scheduler 96 gets a handle, i. e. job ID, from the database manager 54, and transmits the handle to the coalescer 98 (step 190). The coalescer, in turn, obtains the appropriate coalesce table from the database (step 192). For each font name (see step 194), the availability of its corresponding font in the font section 78 is determined, via step 196, through use of the font manager 102. For each font name that is available in the fonts storage section 78, the font name is bound with a Font ID from the font manager 102 (step 198), the font ID pointing to an available font in the fonts storage section.

For each font that is not available in the fonts section 78, one of two options is used (see step 204). The options are prioritized by the system operator and need not be prioritized in any particular order. In the first option a font substitution table, of the type disclosed in the U.S.A. Patent NO. 5,167,013, is used, per step 206 to provide substitute fonts for respective, unavailable fonts. That is, through use of the font substitution table, each font name in the coalescer table which calls for an unavailable font is mapped against an available font and a suitable font ID is obtained, by way of the font manager 102 to bind each font name corresponding to an unavailable font with a font ID corresponding to an available, substitute font. In the second option, an error message is displayed at the UI 27 (208), by appropriately feeding fault information back through the coalesce scheduler 96 and the SSC 52. Subsequently, at step 210, a substitute font is supplied by a supplementary source, such as a font library stored on stream tape, the stream tape being adapted for use on a networked version of the DocuTech™ electronic printer sold by Xerox® Corp. As will be appreciated, when circumstances permit, called for, unavailable fonts could be made available by loading them into the mass memory 24.

Each identifier representing a bitmap or raster requiring image processing (see step 212), is communicated to the ICS/IRS 118 (step 214) by way of the front end 57 (Figures 3 and 10), the database manager 54, the postparse scheduler 112 and the postparser 114 so that a predesignated operations can be performed on predesignated bitmaps. The ICS/IRS cooperatively functions with the image install 86 to achieve the predesignated image processing operations on the predesignated rasters in the raster storage section 72 (step 216) and return new raster identifiers to the coalescer 98. Referring specifically to Figure 10, upon receiving the new raster identifiers and/or binding the font names with respective font IDs, the database job queue 55 is locked and the database coalesce table 56 is updated (step 219) with the new raster identifiers and the appropriate font information, such as the mappings of the font names with their corresponding font IDs.

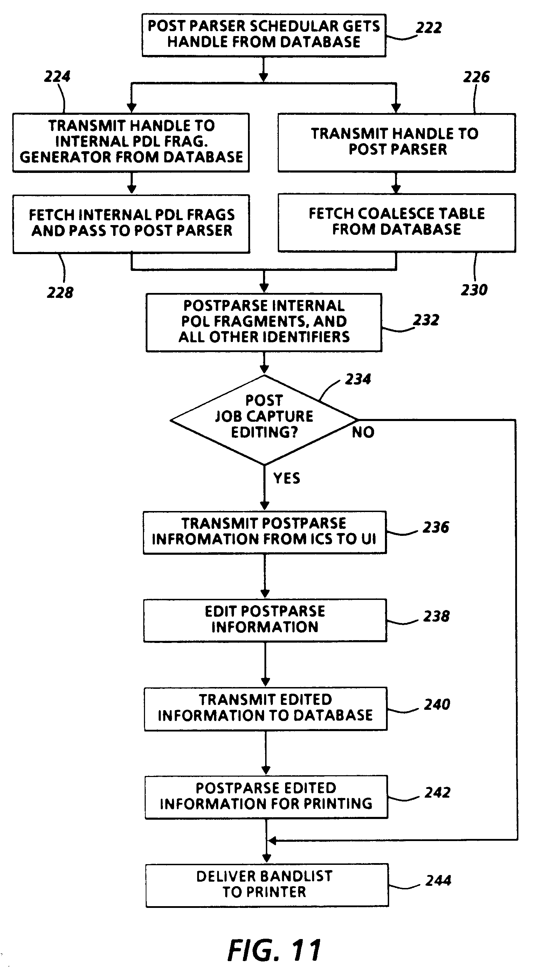

Referring to Figure 11, the operation of the postparsing section 110 is explained in further detail. It should be recognized that the flow diagram of Figure 11 also illustrates a post job capture editing routine, the significance of which will follow from the discussion below. At step 222, the postparser scheduler 112 gets a handle by way of the database manager 54 and passes it to both the internal PDL frags generator 116 (step 224) and the postparser 114 (step 226). In turn, the internal PDL frags generator 116 fetches the appropriate internal PDL fragments from the internal PDL frags storage section 74, via the Internal PDL frags manager 92 (step 228), and the postparser 114 fetches the appropriate raster identifiers and the bound font names, via the database manager (step 230). Upon fetching the above-mentioned information, postparsing is performed at step 232.

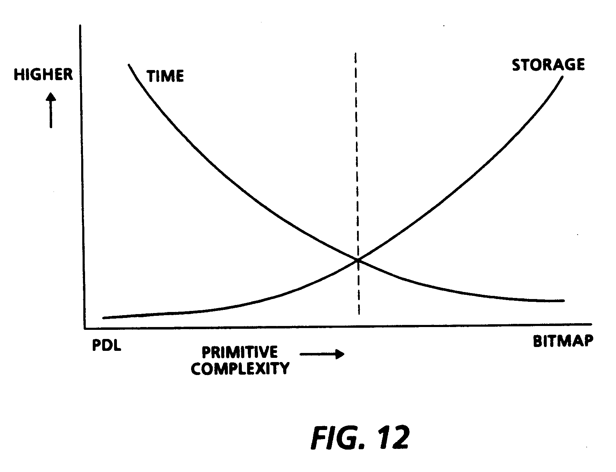

In particular, at step 232 the postparser causes all of the data structures to be placed in a suitable form for printing and places the corresponding raster identifiers, font IDs and primitive representations of internal PDL fragments into a bandlist for printing. In view of Figure 12, it may be desirable to adjust the data structures, during postparsing, to higher or lower primitives, depending on the processing/storage capabilities of the system. As indicated in Figure 12, higher level primitives, such as those expressed by PDLs, require less storage and relatively more processing time, while bitmaps, which are typically easier to process, require more storage. Accordingly, in compiling the bandlist, maintaining a suitable balance with respect to primitive complexity may be desirable.

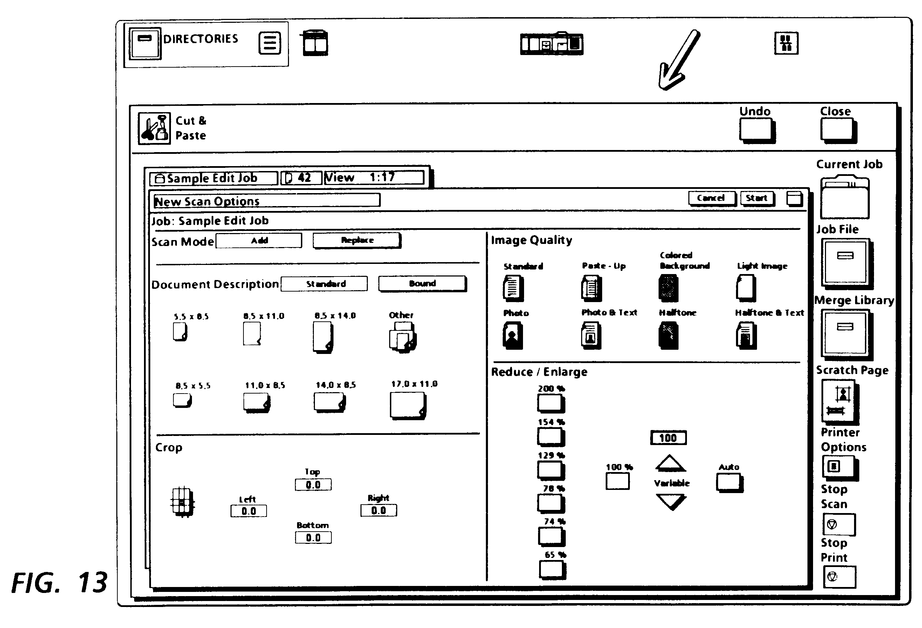

Referring again to Figure 11, it will be appreciated that, subsequent to coalescing, the job can be edited, in a page-by-page manner, before marking thereof. In one example, when editing is desired (see step 234), postparsed information is communicated from the postparser 114 to the UI 27 (step 236), by way of the ICS of image processing section 118, the database manager 54 and the front end 57. As mentioned above, the front end 57 functions cooperatively with the "make ready" process to permit user editing at the UI 27. In one example, editing is performed on selected sections of bits with the UI 27 (step 238). It will be understood that object editing is contemplated by the present invention. Additionally, editing screens of the type used on the DocuTech™ are suitable for use in the present invention, and editing functions of the type enumerated in the DocuTech™ User's Manual, the pertinent portions of which are incorporated herein, are available to the user of the decomposer 32. An exemplary screen used for editing, e. g. "cutting and pasting," is shown in Figure 13.

It should be understood that editing, for certain operations, can be achieved without postparsing. Examples of such operations would include signaturization, as disclosed in a European Patent Application corresponding to U. S. Patent Application Serial No 07/589,941 entitled "Electronic Printing System for Printing Signatures," filed September 28, 1990, the pertinent portions of which are incorporated herein by reference, plex changes or other like operations.

Subsequent to editing, the user passes the edited information back to the postparser 114 by way of the database manager 56 (step 240), the front end 57 and the postparse scheduler 112, to postparse for printing (step 242). At step 244, the postparsed information, which can include primitives representative of internal PDL fragments, bound font names and bitmaps, is inserted into a bandlist and delivered to the marking engine for consumption thereby.

One feature of the present invention is that it introduces various levels of concurrency into the decomposition process. On a broader scale, various processes, such as capture, preparse and coalesce may be performed concurrently. Accordingly, information can be parsed into image related components while one of a variety of coalesce functions is being performed. As a result of parsing and coalescing in parallel, the availability of fonts can be checked, and fault conditions for fonts can be managed without impairing preparsing. Moreover, when faults in fonts are found, the condition can corrected without requiring that the job be preparsed again. Finally, the preparse operation does not interfere with the processing of bitmaps. Essentially, processes serve to break decomposition into discrete components, in a "pipeline-fashion" for increasing overall throughput of the system. Accordingly, the longest delay becomes the longest section of the pipe.

Concurrency is also achieved on a finer scale. For example, the preparser preferably functions in two stages so that as many as two pages in a given job can be worked on simultaneously.

Another feature of the present invention is that it maximizes efficiency of job capture off a network. In particular, jobs can be inputted to the decomposer "on-the-fly," and thus need not be stored in mass memory prior to decomposition.

The present invention may provide a decomposer in which post job capture editing can be achieved. That is, in one embodiment, image related identifiers can be edited on a user interface prior to sending any imaging primitives to a marking engine.

The invention may it provide a scheme in which image related identifiers can be compiled in a central repository, e. g. a database, for use by the various processes of the system. Accordingly, the preparser, coalescer or postparser need not, for the most part, communicate with one another to perform their respective tasks.

## Claims

1. A method of decomposing a job in a printing system having an input device (25), the method comprising the steps of:
programming the job at the input device so as to provide the job with global information and page-level information,
communicating the job to a parsing subsystem (64);
**characterized by**
dividing the job at a first stage (68) of the parsing subsystem (64) into the global information and page-level information;
parsing the page-level information to a second stage (70) of the parsing subsystem (64) and processing the page-level information at the second stage (70) of the parsing subsystem (64) so as to create corresponding data structures for storage in a memory (24);
the first stage (68) of the parsing subsystem (64) processing a first page while the second stage (70) of the parsing subsystem (64) processes a second page.

2. The method as claimed in claim 1, characterized in that the programming step comprises a step of using a job ticket.

3. The method as claimed in claim 2, characterized in that the step of using a job ticket comprises a step of designating billing and accounting information in the global information.

4. The method as claimed in any of claims 1 to 3, further characterized by comprising the step of storing selected image related components in the printing system substantially prior to performing the programming step, wherein the programming step comprises designating, in the job, a call to one of the selected image related components so that a copy of the called components appears on a substrate when the job is printed.

5. An apparatus for decomposing a job having a plurality of electronic pages, comprising:
an input device for programming a job with global information and page-level information;
a dual stage parsing subsystem (64) for receiving the job;
**characterized by**
a first stage (68) of the parsing subsystem (64) for dividing the job into global information and page-level information;
a second stage (70) of the parsing subsystem (64) for receiving the page-level information; and
processing means for processing the page-level information, at the second stage (70) of the parsing subsystem so as to create corresponding data structures for storage in a memory (24),
the first stage (68) processing a first page while the second stage (70) processing a second page.

## Patentansprüche

1. Verfahren zum Zerlegen eines Auftrags in einem Drucksystem, das eine Eingabeeinrichtung (25) umfaßt, wobei das Verfahren folgende Schritte umfaßt:
Programmieren des Auftrags an der Eingabeeinrichtung, um globale Informationen und Informationen auf der Seitenebene für den Auftrag vorzusehen,
Weiterleiten des Auftrags an ein Parsing-Subsystem (64),
gekennzeichnet durch
Aufteilen des Auftrags in einer ersten Stufe (68) des Parsing-Subsystems (64) in die globalen Informationen und in die Informationen auf der Seitenebene,
Parsen der Informationen auf der Seitenebene für eine zweite Stufe (70) des Parsing-Subsystems (64) und Verarbeiten der Informationen auf der Seitenebene in der zweiten Stufe (70) des Parsing-Subsystems (64), um entsprechende Datenstrukturen für das Speichern in einem Speicher (24) zu erstellen,
wobei die erste Stufe (68) des Parsing-Subsystems (64) eine erste Seite verarbeitet, während die zweite Stufe (70) des Parsing-Subsystems (64) eine zweite Seite verarbeitet.

2. Verfahren nach Anspruch 1, dadurch gekennzeichnet, daß der Schritt zum Programmieren einen Schritt zum Verwenden eines Auftragstickets umfaßt.

3. Verfahren nach Anspruch 2, dadurch gekennzeichnet, daß der Schritt zum Verwenden eines Auftragstickets einen Schritt zum Hinzufügen von Fakturierungs- und Buchführungsinformationen zu den globalen Informationen umfaßt.

4. Verfahren nach wenigstens einem der Ansprüche 1 bis 3, weiterhin gekennzeichnet durch einen Schritt zum
Speichern von ausgewählten bildbezogenen Komponenten in dem Drucksystem im wesentlichen vor dem Durchführen des Schrittes zum Programmieren, wobei der Schritt zum Programmieren das Zuweisen eines Aufrufs im Auftrag für eine der ausgewählten bildbezogenen Komponenten umfaßt, so daß eine Kopie der aufgerufenen Komponenten auf einem Substrat erscheint, wenn der Auftrag gedruckt wird.

5. Vorrichtung zum Zerlegen eines Auftrags mit einer Vielzahl von elektronischen Seiten mit
einer Eingabeeinrichtung zum Programmieren eines Auftrags mit globalen Informationen und Informationen auf der Seitenebene,
einem zweistufigen Parsing-Subsystem (64) zum Empfangen des Auftrags,
gekennzeichnet durch
eine erste Stufe (68) des Parsing-Subsystems (64) zum Aufteilen des Auftrags in globale Informationen und in Informationen auf der Seitenebene,
eine zweite Stufe (70) des Parsing-Subsystems (64) zum Empfangen der Informationen auf der Seitenebene, und
eine Verarbeitungseinrichtung zum Verarbeiten der Informationen auf der Seitenebene in der zweiten Stufe (70) des Parsing-Subsystems, um entsprechende Datenstrukturen für das Speichern in einem Speicher (24) zu erzeugen,
wobei die erste Stufe (68) eine erste Seite verarbeitet, während die zweite Stufe (70) eine zweite Seite verarbeitet.

## Revendications

1. Procédé de décomposition d'une directive de travail dans un système comprenant un dispositif d'entrée (25), le procédé comprenant les étapes consistant à :
programmer la directive de travail au dispositif d'entrée pour doter la directive de travail d'une information globale et d'une information de niveau de page,
communiquer la directive de travail à un sous-système d'analyse (64);
caractérisé par
la division de la directive de travail en un premier étage (68) du sous-système d'analyse (64), en donnant l'information globale et l'information de niveau de page,
soumettre à l'analyse l'information de niveau de page à un deuxième étage (70) du sous-système d'analyse (64), et traiter l'information de niveau de page au niveau du deuxième étage (70) du sous-système d'analyse (64), pour créer des structures de données correspondantes pour un stockage dans une mémoire (24),
le premier étage (68) du sous-système d'analyse (64) traitant une première page, tandis que le deuxième étage (70) du sous-système d'analyse (64) traite une deuxième page.

2. Le procédé selon la revendication 1, caractérisé en ce que l'étape de programmation comprend une étape d'utilisation d'un ticket de directive de travail.

3. Le procédé selon la revendication 2, caractérisé en ce que l'étape d'utilisation d'un ticket de directive de travail comprend une étape de désignation d'une information de facturation et de comptabilité dans l'information globale.

4. Le procédé selon l'une quelconque des revendications 1 à 3, caractérisé en outre par :
le fait de comprendre l'étape de stocker des composants liés à l'image sélectionnée dans le système d'impression, sensiblement avant d'effectuer l'étape de programmation, dans lequel l'étape de programmation comprend la désignation, dans la directive de travail, d'un appel à l'un des composants liés à l'image sélectionnée, de manière qu'une copie des composants appelés apparaisse sur un substrat lorsque la directive de travail est imprimée.

5. Un dispositif de décomposition d'une directive de travail comportant une pluralité de pages électroniques, comprenant :
un dispositif d'entrée pour programmer une directive de travail avec une information globale et une information de niveau de page,
un sous-système d'analyse (64) à étage dual, pour recevoir la directive de travail;
caractérisé par
un premier étage (68) du sous-système d'analyse (64), pour diviser la directive de travail en une information globale et une information de niveau de page;
un premier étage (70) du sous-système d'analyse (64), pour recevoir l'information de niveau de page; et
des moyens de traitement, pour traiter l'information de niveau de page, au deuxième étage (70) du sous-système d'analyse, pour créer des structures de données correspondante pour un stockage dans une mémoire (24),
le premier étage (68) traitant une première page, tandis que le deuxième étage (70) traite une deuxième page.
